# EUROPEAN PATENT APPLICATION

(11) **EP 3 168 277 A1**
(43) Date of publication of application: **17.05.2017**
(21) Application number: 15194097.0
(22) Date of filing: 11.11.2015
(51) Int. Cl.: C09K 8/584

(54) **PROCESS FOR PREPARING A SYNTHETIC ANIONIC SULPHUR-CONTAINING SURFACTANT COMPOSITION AND METHOD AND USE FOR THE RECOVERY OF OIL**

(71) Applicant: Shell Internationale Research Maatschappij B.V., 2596 HR Den Haag (NL)
(72) Inventor: SOUTHWICK, Jeffery George, 2288GS Rijswijk (NL); VAN BATENBURG, Diederik Willem, 2288GS Rijswijk (NL); PARKER, Andrew, 2288GS Rijswijk (NL); MUL, Pim, 1031HW Amsterdam (NL); WADMAN, Sipke Hidde, 1031HW Amsterdam (NL)
(74) Representative: Matthezing, Robert Maarten

(57) **Abstract**

The invention relates to a process for preparing a synthetic anionic sulphur-containing surfactant composition comprising the steps of:
(a) providing a surfactant precursor which precursor has the general formula R-O-SO₃-H (I) or the general formula 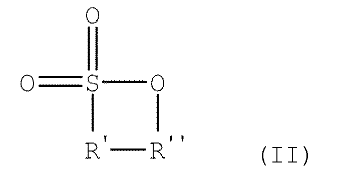 in which R, R' and R" are each a hydrocarbyl group containing hydrogen and carbon and optionally oxygen; and (b) contacting the surfactant precursor with an ammonia liquid to obtain the surfactant composition, wherein the ammonia liquid is applied in an amount in excess to that required for stoichiometric neutralization of the surfactant precursor. The invention further relates to a process for recovering oil from an oil-bearing formation in which use is made an oil recovery formulation comprising the surfactant; and the use of the surfactant an oil recovery formulation.

## Description

### Field of the Invention

The present invention relates to a process for preparing a synthetic anionic sulphur-containing surfactant composition; a process for recovering oil from an oil-bearing formation in which use is made an oil recovery formulation comprising the surfactant; and the use of the surfactant an oil recovery formulation.

### Background of the Invention

In the recovery of oil from a subterranean formation, it is possible to recover only a portion of the oil in the formation using primary recovery methods utilizing the natural formation pressure to produce the oil. A portion of the oil that cannot be produced from the formation using primary recovery methods may be produced by improved or enhanced oil recovery (EOR) methods.

One enhanced oil recovery method utilizes an alkaline-surfactant-polymer ("ASP") flood in an oil-bearing formation to increase the amount of oil recovered from the formation. An aqueous dispersion of an alkali, a surfactant, and a polymer is injected into an oil-bearing formation to increase recovery of oil from the formation, either after primary recovery or after a secondary recovery waterflood. The ASP flood enhances recovery of oil from the formation by lowering interfacial tension between oil and water phases in the formation, thereby mobilizing the oil for production. Interfacial tension between the oil and water phases in the formation is reduced by the surfactant of the ASP flood and by the formation of soaps by alkali interaction with acids in the oil. The polymer increases the viscosity of the ASP fluid, typically to the same order of magnitude as the oil in the formation, so the mobilized oil may be forced through the formation for production by the ASP flood.

Use of ASP enhanced oil recovery to recover oil from subsea oil-bearing formations may, however, be constrained by the amount of space available on an offshore oil recovery platform and by the weight limitations of the platform. Storage facilities must be provided for the polymer, the surfactant, and for the alkali. In some instances the offshore platform space and weight limitations preclude the use of ASP enhanced oil recovery since there is not enough room to store all of the components of the ASP flood on the platform or the weight of the components of the ASP flood is prohibitive for use on an offshore oil recovery platform.

Alkalis most commonly used as the alkali in ASP flood enhanced oil recovery processes include hydroxides and carbonates, and the most common alkali is sodium carbonate. Offshore oil recovery platform limitations on space and weight may render an alkali-carbonate ASP enhanced oil recovery process untenable for recovering oil from a subsea formation due to the relatively large storage space required for the alkali-carbonate storage, the large space required for mixing facilities, and the relatively heavy weight of the alkali-carbonate solution.

Furthermore, in oil-bearing formations containing a significant concentration of calcium ions dispersed in water and/or oil in the formation or dispersed along the surfaces of the formation, use of an alkali such as a carbonate in an ASP flood enhanced oil recovery process contributes to the build-up of scale in production well strings. Water-soluble alkalis used in an ASP flood such as sodium carbonate react with calcium from the formation water, oil, or surfaces to form calcium carbonate. Contact of the alkali carbonate of the ASP flood with calcium in the formation near the production well induces the formation of calcium carbonate, some of which precipitates and deposits as scale in the production well strings. When the calcium content of a formation is high, such scale deposition may require that the production string either be periodically treated to remove the scale or that the production string be periodically replaced.

Improvements to existing ASP enhanced oil recovery methods, compositions, and systems are therefore desirable. In particular, methods, compositions, and systems effective to further enable utilization of ASP-based enhanced oil recovery in subsea oil-bearing formations and to inhibit the deposition of scale in production well strings during an ASP enhanced oil recovery process are most desirable.

Object of the present invention is to deal with the above-mentioned problems as experienced in the recovery of oil from a subterranean formation.

### Summary of the Invention

It has now been found that this object can be realized when use is made of an oil recovery formulation comprising a surfactant composition which has been prepared in a particular manner.

Accordingly, the present invention relates to a process for preparing a synthetic anionic sulphur-containing surfactant composition comprising the steps of:
(a) providing a surfactant precursor which has the general formula R-O-SO₃-H (I) or the general formula 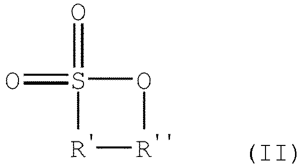 in which R, R' and R" are each a hydrocarbyl group containing hydrogen and carbon and optionally oxygen; and
(b) contacting the surfactant precursor with an ammonia liquid to obtain the surfactant composition, wherein the ammonia liquid is applied in an amount in excess to that required for stoichiometric neutralization of the surfactant.

In addition, the present invention relates to a process for recovering oil from an oil-bearing formation in which use is made an oil recovery formulation comprising the present surfactant composition. Further, the present invention relates to the use of the present surfactant composition to prepare an oil recovery formulation.

The present invention has the advantage that the amounts of surfactant precursor and ammonia liquid can be adjusted so that the resulting surfactant composition can be diluted with water and injected into an oil formation without the need of additional chemicals. Further, the present invention makes it possible that the oil recovery formulation can be prepared in the oil field by simply mixing the present surfactant composition with water that is available near the oil field. The handling of large amounts of alkalis in the oil field can thus be avoided. In this respect it is observed that for example anhydrous liquid ammonia yields 6.2 times the alkalinity of an equivalent weight amount of sodium carbonate. Thus, the weight requirement of the alkali component of an ASP flood system can be reduced substantially in accordance with the present invention. Less space and weight will be required near the oil field if use is made of an oil recovery formulation which contains the present surfactant composition when compared with conventionally used alkali-carbonate alkali-based oil recovery formulations since less must be used to provide equivalent levels of alkalinity. On an offshore platform used for recovery of oil from a subsea oil-bearing formation, space and weight savings provided by substituting the present surfactant composition for conventionally used alkalis may be the determining factor of the feasibility of using an ASP EOR process on the platform.

Furthermore, use of an oil recovery formulation containing the present surfactant composition is much less likely to induce precipitation of calcium in the production well strings of the production well than conventionally used alkali carbonates. In this respect it is observed that calcium hydroxide formed when utilizing the present surfactant composition will only precipitate at Ca²⁺ concentrations above 8.8% at 25°C - which is above the Ca²⁺ concentration in most oil-bearing formations. However, when using conventional alkali carbonates the carbonate formed will precipitate at Ca²⁺ concentrations on the order of 3x10⁻⁷%. Therefore, significantly less calcium will precipitate when using an oil recovery formulation containing the present surfactant composition when compared with conventional alkali carbonates, and thus significantly less inhibition of the development of scale in the production well strings of a production well be realized.

### Detailed description of the invention

In step (a), a surfactant precursor is provided having the general formula R-O-SO₃-H (I) or the general formula the general formula 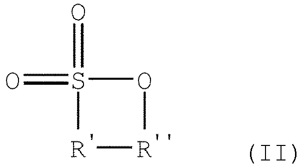 in which R, R' and R" are each a hydrocarbyl group containing hydrogen and carbon and optionally oxygen.

Preferably, R is R₁-CH₂- in which R₁ is a hydrocarbyl group comprising of from 4-100 carbon atoms and optionally of from 1 -30 oxygen atoms. Preferably, R₁ is a hydrocarbyl group comprising of from 10-60 carbon atoms and optionally of from 1-20 oxygen atoms.

R' and R" are preferably each R₂-CH₂- in which R₂ is a hydrocarbyl group comprising of from 4-28 carbon atoms. Preferably, R₂ is a hydrocarbyl group comprising of 4-20 carbon atoms.

Preferably, the surfactant precursor to be used in accordance with the present invention is a compound consisting of an alkyl group, an alkylene oxide block and a sulfate group.

When the surfactant precursor is an internal olefin sulfonate compound, it preferably contains from 14 to 28 carbons, more preferably 14-24 carbon atoms, and has the general formula 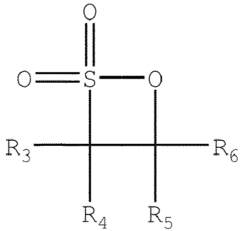 in which each R₃, R₄, R₅ and R₆ are the same or different and are hydrogen or saturated hydrocarbyl groups. R₃, R₄, R₅ and R₆ can independently be linear or branched hydrocarbyl groups. Suitably, at least one of R₃ and R₄, and at least one of R₅ and R₆ is an alkyl group.

In step (b), the surfactant precursor is contacted with an ammonia liquid to obtain the surfactant composition, wherein the ammonia liquid is applied in an amount in excess to that required for stoichiometric neutralization of the surfactant.

It will therefore be understood that the surfactant composition to be prepared in accordance of the present invention contains in addition to the anionic sulphur-containing surfactant the excess of ammonia liquid as applied in step (b).

The excess of ammonia liquid is preferably such that the molar ratio of ammonia to the surfactant precursor is in the range of from 2:1-100:1, preferably in the range of from 5:1-100:1, and more preferably in the range of from 10:1-100:1.

It will further be understood that the surfactant composition will be in liquid form.

The ammonia liquid to be used in step (b) can be anhydrous liquid ammonia or ammonia in aqueous solution. Preferably, the ammonia liquid is anhydrous liquid ammonia.

Suitably, the precursor of the surfactant is contacted with the ammonia liquid at a temperature in the range of from 0-100 °C and a pressure in the range of from 1-60 bara in the presence of water.

Preferably, the surfactant precursor is contacted with the ammonia liquid at a temperature in the range of from 10-80 °C, more preferably in the range of from 20-60 °C.

Preferably, the surfactant precursor is contacted with the ammonia at a pressure in the range of from 1-40 bara, more preferably in the range of from 1-25 bara.

Preferably, prior to step (b) the surfactant precursor is contacted with a sodium hydroxide solution. Preferably, the molar ratio of sodium hydroxide to surfactant precursor is in the range of from 0:1 - 1.5:1, preferably in the range of from 0:1 - 1.3:1.

The ammonia liquid suitably contains at least 10 wt% ammonia, based on total weight of ammonia liquid. Preferably, the ammonia liquid contains at least 20 wt%, more preferably more than 30 wt%, and most preferably at least 90 wt% ammonia, based on total weight of ammonia liquid.

The present invention also relates to a process for recovering oil from an oil-bearing formation, comprising the steps of:
(a) mixing the surfactant composition as prepared in accordance with the present invention with water, and optionally a polymer, to form an oil recovery formulation;
(b) introducing the oil recovery formulation as obtained in step (a) into the oil-bearing formation; and
(c) producing oil from the oil-bearing formation after introduction of the oil recovery formulation into the oil-bearing formation.

The water to be used in the present oil recovery process may have a total dissolved solids (TDS) content in the range of from 100-200,000 ppm, suitably 5,000-150,000 ppm, preferably in the range of from 5,000-50,000, and more preferably in the range of from 5,000-35,000 ppm, as measured according to ASTM D5907. The water may be fresh water or a brine solution. The water may be provided from a water source, where the water source may be a fresh water source having a TDS content of less than 10,000 ppm selected from the group consisting of a river, a lake, a fresh water sea, an aquifier, and formation water having a TDS content of less than 10,000 ppm, or the water source may be a saline water source having a TDS content of 10,000 ppm or greater selected from the group consisting of seawater, brackish water, an aquifer, a brine solution provided by processing a saline water source, and formation water having a TDS content of 10,000 ppm or greater.

When the ASP EOR process utilizing the oil recovery formulation is conducted offshore to recover oil from a subsea oil-bearing formation, the water may be seawater treated to reduce the salinity of the seawater to a desired TDS content. The salinity of the seawater may be reduced by conventional desalination processes, for example, by passing the seawater through one or more nanofiltration, reverse osmosis, and/or forward osmosis membranes.

The oil recovery formulation to be used in accordance with the present invention may also be comprised of a co-solvent with water, where the co-solvent may be a low molecular weight alcohol including, but not limited to, methanol, ethanol, and propanol, isobutyl alcohol, secondary butyl alcohol, n-butyl alcohol, t-butyl alcohol, or a glycol including, but not limited to, ethylene glycol, 1,3-propanediol, 1,2-propandiol, diethylene glycol butyl ether, triethylene glycol butyl ether, or a sulfosuccinate including, but not limited to, sodium dihexyl sulfosuccinate. The co-solvent may be utilized for the purpose of adjusting the salinity of the oil recovery formulation fluid to optimize the salinity of the fluid for maximum reduction of interfacial tension between oil and water in the formation, and, optionally, for assisting in prevention of formation of a viscous emulsion upon conducting the EOR process. If present, the co-solvent may comprise from 100 ppm to 50,000 ppm, or from 500 ppm to 5,000 ppm of the oil recovery formulation.

The oil recovery formulation to be used in accordance with the present invention preferably also contains a polymer.

The polymer may provide the oil recovery formulation with a viscosity on the same order of magnitude as the viscosity of oil in the formation under formation temperature conditions so the oil recovery formulation may drive mobilized oil across the formation for production from the formation with a minimum of fingering of the oil through the oil recovery formulation and/or fingering of the oil recovery formulation through the oil.

The polymer can suitably selected from the group consisting of polyacrylamides, partially hydrolyzed polyacrylamides, polyacrylates, ethylenic co-polymers, biopolymers, carboxymethylcelloluses, polyvinyl alcohols, polystyrene sulfonates, polyvinylpyrrolidones, AMPS (2-acrylamide-methyl propane sulfonate), and combinations thereof.

Suitable examples of ethylenic co-polymers include co-polymers of acrylic acid and acrylamide, acrylic acid and lauryl acrylate, and lauryl acrylate and acrylamide.

Suitable examples of biopolymers include xanthan gum and guar gum.

The concentration of polymer in the oil recovery formulation can suitably be in the range of from 500-10,000 ppm, preferably be in the range of from 1000-5000 ppm.

The polymer may have a molecular weight average of from 10,000 to 30,000,000 Daltons, or from 100,000 to 10,000,000 Daltons.

The surfactant composition as prepared according to the present invention is mixed with the other components of the oil recovery formulation in an amount to provide the oil recovery formulation with a pH of at least 9, preferably at least 10, more preferably in the range of from 10-12.

The surfactant composition mixed with the other components of the oil recovery formulation will provide relatively highly buffered alkalinity to the oil recovery formulation due to ammonia's dissociation constant, resulting in a decrease of the time required and the amount of oil recovery formulation required for the oil recovery formulation to breakthrough from an injection well to a production well in the ASP EOR process of the present invention.

The surfactant composition can suitably be mixed with the other components of the oil recovery formulation in an amount to provide ammonia in a concentration in the oil recovery formulation in the range of from 0.05-0.5 M, preferably in the range of from 0.1-0.25 M.

The oil recovery formulation to be used in accordance with the present invention comprises ammonia liquid which may interact with oil in the formation to form a soap effective to reduce the interfacial tension between oil and water in the formation. The ammonia liquid may also reduce surfactant adsorption on the reservoir rock surfaces.

The oil recovery formulation to be used in accordance with the present invention suitably contains an amount of the surfactant composition effective to reduce the interfacial tension between oil and water in the formation and thereby mobilize the oil for production from the formation. The oil recovery formation preferably contains from 0.05-5 wt.% of the surfactant composition or combination of surfactants, or may contain from 0.1 wt.% to 3 wt.% of the surfactant or combination of surfactants.

The oil-bearing formation in the present oil recovery process may be a subterranean formation. The subterranean formation may comprise one or more porous matrix materials selected from the group consisting of a porous mineral matrix, a porous rock matrix, and a combination of a porous mineral matrix and a porous rock matrix, where the porous matrix material may be located beneath an overburden at a depth ranging from 50 meters to 6000 meters, or from 100 meters to 4000 meters, or from 200 meters to 2000 meters under the earth's surface.

The subterranean formation may be a subsea subterranean formation. The method and system of the present invention may be particularly suited for recovering oil from an oil-bearing subsea subterranean formation utilizing an offshore oil recovery platform.

The present invention also relates to the use of the surfactant composition as prepared in accordance with the present invention, and optionally a polymer, for preparing an oil recovery formulation.

### Example

An oil recovery process in accordance with the present invention was performed. An experiment was conducted to determine the effect of utilizing an ammonia-surfactant-polymer formulation on residual oil recovery from a formation. A Bandera Brown core (42 mD) was prepared by inserting in a standard core holder. The core was then saturated with CO2 and flooded with a synthetic reservoir brine solution. The core was then positioned vertically in an oven at 52 C, and saturated with a low viscosity (1.8 cp at 52 C) crude oil until no more water was produced upon further introduction of oil to the Bandera Brown core. To simulate water flood production of oil from the core, the core was then flooded with the synthetic brine solution from the bottom of the core at a rate of 1.0 meter/day until no more oil was produced from the core. The amount of residual oil remaining in the core after the waterflood (Sor) was calculated by subtracting the amount of oil recovered as a result of the waterflood from the total amount of oil absorbed by the core during saturation of the core with oil.

Oil recovery resulting from an ammonia-surfactant-polymer flood was then determined. An ammonia-surfactant-polymer brine composition in accordance with the present invention was prepared containing 0.6 wt. % NH₄OH, 0.6 wt.% of a surfactant blend comprosing a 3 to 1 ratio of a C12-13 alkyl 7 propoxy sulfate and C15-18 internal olefin sulfonate, 1300 ppm FLOPAAM 3330 (a hydrolysed polyacrylamide polymer having an approximate molecular weight of 8 million Dalton and commercially available from SNF), and 3.25 wt.% NaCl.

To determine the oil recovery resulting from an ammonia-surfactant-polymer flood after the waterflood, the core was flooded with 0.5 pore volumes of the ammonia-surfactant-polymer brine solution at a flow rate of 3 feet/day followed by 2 pore volumes of 1300 ppm FLOPAAM 3330 in 1.75% NaCl to produce further oil from the residual oil remaining in the core. Introduction of 0.5 pore volumes of ammonia-surfactant-polymer brine solution and 2 pore volumes of polymer solution to the core provided approximately 95% recovery of the residual oil in the core.

## Claims

1. A process for preparing a synthetic anionic sulphur-containing surfactant composition comprising the steps of:
(a) providing a surfactant precursor which has the general formula R-O-SO₃-H (I) or the general formula 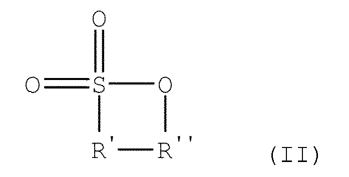 in which R, R' and R" are each a hydrocarbyl group containing hydrogen and carbon and optionally oxygen; and
(b) contacting the surfactant precursor with an ammonia liquid to obtain the surfactant composition, wherein the ammonia liquid is applied in an amount in excess to that required for stoichiometric neutralization of the surfactant precursor.

2. The process according to claim 1, wherein the process further comprises
(c) recovering the surfactant composition as obtained in step (b).

3. The process according to claim 1 or 2, wherein R is R₁-CH₂- in which R₁ is a hydrocarbyl group comprising of from 4-100 carbon atoms and optionally of from 1-30 oxygen atoms; and R' and R" are each R₂-CH₂- in which R₂ is a hydrocarbyl group comprising of from 4-28 carbon atoms.

4. The process according to claim 3, wherein the precursor is a compound consisting of an alkyl group, an alkylene oxide block and a sulfate group.

5. The process according to claim 3, wherein the precursor is an internal olefin sulfonate compound containing from 14-28 carbons and according to the formula 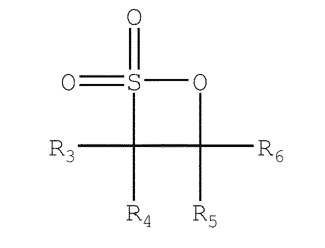 in which each R₃, R₄, R₅ and R₆ are the same or different and are hydrogen or saturated hydrocarbyl groups.

6. The process according to any one of claims 1-5, wherein the molar ratio of ammonia to surfactant precursor in step (b) is in the range of from 5:1 - 100:1.

7. The process according to any one of claims 1-6, wherein the ammonia liquid is anhydrous liquid ammonia.

8. The process according to any one of claims 1-7, wherein the surfactant precursor is contacted with the ammonia liquid at a temperature in the range of from 0-80 °C and a pressure in the range of from 1-15 bara in the presence of water.

9. The process according to any one of claims 1-8, wherein the ammonia liquid contains at least 10 wt% ammonia, based on total weight of ammonia liquid.

10. A process for recovering oil from an oil-bearing formation, comprising the steps of:
(a) mixing the surfactant composition as prepared according to any one of claims 1-9 with water, and optionally a polymer, to form an oil recovery formulation;
(b) introducing the oil recovery formulation as obtained in step (a) into the oil-bearing formation; and
(c) producing oil from the oil-bearing formation after introduction of the oil recovery formulation into the oil-bearing formation.

11. The process according to claim 10, wherein the water has a total dissolved solids (TDS) content in the range of from 5,000-150,000 ppm as measured according to ASTM D5907.

12. Use of the surfactant composition as prepared according to any one of claims 1-9, and optionally a polymer, for preparing an oil recovery formulation.
